# EUROPÄISCHE PATENTANMELDUNG

(11) **EP 1 981 240 A1**
(43) Veröffentlichungstag der Anmeldung: **15.10.2008**
(21) Anmeldenummer: 07405115.2
(22) Anmeldetag: 12.04.2007
(51) Int. Cl.: H04L 29/06

(54) **Verfahren und System zum Zugreifen auf Ressourcen in einem externen Kommunikationsnetz**

(71) Anmelder: Swisscom Solutions AG, 3097 Liebefeld (CH)
(72) Erfinder: Skirl, Miguel, 4054 Basel (CH)
(74) Vertreter: Rentsch & Partner

(57) **Zusammenfassung**

Identifikationsdaten, die über eine Benutzerschnittstelle (121) eines Benutzercomputers (12) von einem Benutzer erfasst und zur Zugangskontrolle an eine computerbasierte Domänenkontrolleinheit (11) der Heimdomäne (1) des Benutzercomputers (12) geleitet werden, werden im Benutzercomputer (12) zugeordnet zur Zieldomäne (2) gespeichert. Die in der Domänenkontrolleinheit (11) erfassten Identifikationsdaten werden zudem automatisch an eine computerbasierte Benutzerdatenbank (222) einer Zieldomäne (2) übertragen und dort gespeichert. Beim Zugriff durch den Benutzercomputer (12) auf computergestützte Ressourcen (21) in einem Kommunikationsnetzwerk (20) der Zieldomäne (2) verwendet der Benutzercomputer (12) automatisch die lokal gespeicherten Identifikationsdaten. Ein Benutzer kann somit von seiner Heimdomäne (1) aus auf Ressourcen (21) in der externen Zieldomäne (2) zugreifen, ohne dafür spezielle Identifikationsdaten eingeben zu müssen, und ohne dass die Benutzerdaten und Zugriffsrechte vollständig über Domänegrenzen hinweg vertraut sein müssen.

## Beschreibung

### Technisches Gebiet

Die vorliegende Erfindung betrifft ein Verfahren und ein System zum Zugreifen von einem Benutzercomputer in einer Heimdomäne eines lokalen ersten Kommunikationsnetzwerks auf computergestützte Ressourcen in einer Zieldomäne eines externen zweiten Kommunikationsnetzwerks. Die vorliegende Erfindung betrifft insbesondere ein Verfahren und ein System zum Zugreifen von einem Benutzercomputer in einer Heimdomäne auf computergestützte Ressourcen in einer Zieldomäne, wobei der Zugang zu Ressourcen der Domänen jeweils durch computerbasierte Domänenkontrolleinheiten kontrolliert wird basierend auf Benutzerzugangsdaten mit Identifikationsdaten zur Identifizierung eines Benutzers.

### Stand der Technik

Lokale Kommunikationsnetze, so genannte Local Area Networks (LAN), werden insbesondere auch in kleineren und mittleren Unternehmen, mit beispielsweise 25 bis 500 Mitarbeitern, eingesetzt zur Vernetzung von Benutzercomputern, z.B. Personal Computers, mit weiteren computerbasierten Ressourcen wie Drucker, Scanner, File Server, Applikationsserver, Datenbankserver etc. Diese Kommunikationsnetze werden zentral verwaltet, wobei die zentrale Verwaltung unter anderem die Zugriffskontrolle und den Zugriffsschutz auf Daten, Applikationen, Drucker und andere computergestützte Ressourcen im lokalen Kommunikationsnetz miteinschliesst und dementsprechend das Führen und Verwalten einer Benutzerdatenbank mit Benutzerzugangsdaten erfordert. Die Benutzerzugangsdaten umfassen Identifikationsdaten zur Identifizierung eines Benutzers, beispielsweise ein Benutzername und ein Passwort und/oder biometrische Daten wie beispielsweise ein Fingerabdruck, ein Retina- oder Irismuster, oder Gesichtsmerkmale. Durch die Benutzerverwaltung und Zugriffskontrolle werden harte Systemgrenzen definiert, wobei die Zugreifbarkeit innerhalb des Systems gleichzeitig die Nichtzugreifbarkeit von ausserhalb des Systems nach sich zieht. Die Folge ist eine exponentiell wachsende Anzahl an Zugriffssystemen, so dass im schlimmsten Falle zu jeder Ressource ein eigenes Zugriffssystem gehört und der Benutzer beim Zugriff auf mehrere Ressourcen auch entsprechend viele Benutzernamen und Passwörter kennen und sich merken muss.

Zur Aufweichung der harten Systemgrenzen werden entweder Anpassungen beim zugreifenden System oder beim zugegriffenen System vorgenommen. Beim zugreifenden System werden beispielsweise Tastatureingabe-Speicher-Systeme, oder so genannte Windows-Grabber oder Makro-Rekorder verwendet um die vom Benutzer eingegebenen Benutzerzugangsdaten zu erfassen und zu speichern. Da die Anpassungen beim zugreifenden System auf der Client-Seite vorgenommen werden müssen, ist die Kenntnis von zahlreichen verschiedenen und teilweise unbekannten Endsystemen erforderlich. Das heisst, neben der Erfassung und Speicherung von Beglaubigungsdaten beim zugreifenden System müssen angepasste programmierte Softwaremodule die Zugriffskontroll- und/oder Beglaubigungsverfahren unterschiedlichster Endsysteme kennen und generisch abhandeln können, damit tatsächlich eine Reduzierung der erforderlichen Benutzereingaben erreicht wird. Zudem können Teile des Zugriffskontroll- und/oder Beglaubigungsverfahren in das Client-Betriebssystem integriert sein, so dass bei neuen Versionen des Betriebssystems Inkompatibilitätsprobleme entstehen können, wenn das Betriebssystem hinsichtlich der Anpassungen nicht völlig transparent offen gelegt wird.

Bei Anpassungen am zugegriffenen System wird auf eine Koordinierung und Synchronisierung der Benutzerverwaltung und Zugriffskontrolle mehrerer (aller beteiligter) zugegriffenen System abgezielt. Hierzu zählt beispielsweise das Domänenmodell von Microsoft, das Vertrauensstellungen vorsieht und dergestalt Benutzer- und Ressourcendomänen miteinander zu einem einzigen Zugriffssystem verbindet. Dazu zählen aber auch Identitätsverwaltungssysteme, die die Systemgrenzen einer Domäne überwinden und Replizierungen oder Synchronisierungen von einem ersten Zugriffssystem zu einem zweiten Zugriffssystem bieten, beispielsweise MIIS (Microsoft Identity Integration Server) oder entsprechende Lösungen von Oracle, SUN oder Novell, die im Bereich der Meta-Directories angesiedelt werden können. Da bei diesen replikationsbasierten Lösungen die vollständigen Benutzerdaten und zugeordneten Zugriffsrechte repliziert werden, ergeben sich jedoch Probleme der Daten- und Replizierungshoheit, sowie der Eindeutigkeit der Benutzeridentitäten. Somit werden diese Replizierungs- und Synchronisierungsansätze hauptsächlich beschränkt in geschlossenen z.B. firmeneigenen Kommunikationsnetzen eingesetzt.

Bei der Erweiterung eines zugegriffenen Systems hin auf eine Synchronisierung aller zugegriffenen System stellen sich in der Regel Probleme der Daten- und Replizierungshoheit, sowie der Eindeutigkeit der Benutzerentitäten, so dass denn auch die Replizierungs- und Synchronsierungsansätze im Backend-Bereich sich hauptsächlich auf das firmeneigene Netz und seine Identity-Systeme beschränkt. Um Serversysteme und dazugehörige Beglaubigungssysteme zusammenzubringen, ist eine komplexe, kongruierende Zuordnung von Datenfeldern zweier oder mehrerer Beglaubigungsverzeichnisse erforderlich und bedingt in der Regel die Konzipierung eines Single-Sign-on (Zugang mit einmaliger Eingabe von Benutzerzugangsdaten), das klar definierten firmeninternen Zwecken dient und die Problematik generischen, domänenübergreifenden Zugriffs (auf computergestützte Ressourcen) nicht wirklich löst.

### Darstellung der Erfindung

Es ist eine Aufgabe der vorliegenden Erfindung ein Verfahren und ein System zum Zugreifen von einem Benutzercomputer in einer Heimdomäne eines lokalen ersten Kommunikationsnetzwerks auf computergestützte Ressourcen in einer Zieldomäne eines externen zweiten Kommunikationsnetzwerks vorzuschlagen, welches Verfahren und welches System nicht die Nachteile des Stands der Technik aufweisen. Es ist insbesondere eine Aufgabe der vorliegenden Erfindung ein Verfahren und ein System zum Zugreifen auf ausserhalb der Heimdomäne angeordnete Ressourcen vorzuschlagen, welches Verfahren und welches System keine vollständige Replikation von Benutzerdaten und Zugriffsrechten über Domänegrenzen hinweg benötigen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Für die Zugriffskontrolle auf computergestützte Ressourcen in einer Heimdomäne eines lokalen ersten Kommunikationsnetzwerks werden Benutzerzugangsdaten, welche Identifikationsdaten zur Identifizierung eines Benutzers eines Benutzercomputers umfassen, in einer computerbasierten Domänenkontrolleinheit der Heimdomäne im lokalen ersten Kommunikationsnetzwerk über eine Benutzerschnittstelle des Benutzercomputers erfasst.

Die oben genannten Ziele werden durch die vorliegende Erfindung insbesondere dadurch erreicht, dass, zum Zugreifen vom Benutzercomputer in der Heimdomäne des lokalen ersten Kommunikationsnetzwerks auf computergestützte Ressourcen in einer Zieldomäne eines externen zweiten Kommunikationsnetzwerks, die oben genannten Identifikationsdaten im Benutzercomputer zugeordnet zur Zieldomäne gespeichert werden, dass die in der Domänenkontrolleinheit erfassten Identifikationsdaten an eine im zweiten Kommunikationsnetzwerk angeordnete computerbasierte Benutzerdatenbank der Zieldomäne übertragen werden, dass die übertragenen Identifikationsdaten in der Benutzerdatenbank der Zieldomäne gespeichert werden, und dass auf eine der computergestützten Ressourcen in der Zieldomäne durch den Benutzercomputer unter Verwendung der im Benutzercomputer gespeicherten Identifikationsdaten zugegriffen wird. Die Übertragung der ldentifikationsdaten von der Domänenkontrolleinheit in der Heimdomäne an die Benutzerdatenbank in der Zieldomäne erfolgt beispielsweise durch eine ausserhalb des ersten Kommunikationsnetzwerks angeordnete computerbasierte Replikationseinheit, welche die erfassten Identifikationsdaten aus der Domänenkontrolleinheit entgegennimmt, an die Benutzerdatenbank der Zieldomäne überträgt und dort speichert. Die computergestützten Ressourcen umfassen beispielsweise einen oder mehrere Applikations-Server, Datenbank-Server, Kommunikations-Server, Web-Server, E-Mail-Server und/oder Drucker-Server, die durch Benutzercomputer in mehreren verschiedenen Heimdomänen von jeweils einem von mehreren Kommunikationsnetzwerken unter Verwendung der jeweils im betreffenden Benutzercomputer gespeicherten Identifikationsdaten zugreifbar sind. Durch die automatische lokale Erfassung der Identifikationsdaten im Benutzercomputer und die automatische Übertragung und Speicherung der Identifikationsdaten in der Benutzerdatenbank der Zieldomäne wird ermöglicht, dass beim Zugriff auf Ressourcen in der Zieldomäne von der Heimdomäne aus automatisch die im Benutzercomputer gespeicherten Identifikationsdaten zur Identifizierung des Benutzers in der Zieldomäne verwendet werde können, so dass Benutzer von der Heimdomäne aus auf Ressourcen in der Zieldomäne zugreifen können, ohne dafür spezielle Identifikationsdaten (erneut) eingeben zu müssen, und ohne dass die Benutzerdaten und Zugriffsrechte vollständig über Domänegrenzen hinweg vertraut sein müssen.

In einer bevorzugten Ausführungsvariante wird dem ersten Kommunikationsnetzwerk eine Firmenkennung zugewiesen. Die Identifikationsdaten werden beim Speichern der Identifikationsdaten im Benutzercomputer und beim Speichern der übertragenen Identifikationsdaten in der Benutzerdatenbank der Zieldomäne jeweils durch diese Firmenkennung erweitert. Beim Zugreifen auf die Ressource in der Zieldomäne werden dann die durch die Firmenkennung erweiterten Identifikationsdaten verwendet. Durch die Zuordnung und die Erweiterung der Identifikationsdaten mit einer Firmenkennung (oder Gruppenkennung) kann in der Zieldomäne beim Zugriff auf Ressourcen der Zieldomäne zwischen Benutzern unterschiedlicher Firmenzugehörigkeit (respektive Gruppenzugehörigkeit) unterschieden werden, was beispielsweise eine firmenspezifische (respektive gruppenspezifische) Auslieferung von Diensten einer Dienstplattform der Zieldomäne und/oder eine firmenspezifische (respektive gruppenspezifische) Kostenverrechnung solcher Dienste ermöglicht.

In einer Ausführungsvariante wird in der Domänenkontrolleinheit der Heimdomäne, bei Änderungen der Benutzerzugangsdaten über die Benutzerschnittstelle, eine Datei mit den Identifikationsdaten bereitgestellt. Diese Datei wird durch eine ausserhalb des ersten Kommunikationsnetzwerks angeordnete computerbasierte Replikationseinheit, beispielsweise periodisch, von der Domänenkontrolleinheit der Heimdomäne in die Replikationseinheit kopiert. Die Replikationseinheit aktualisiert die Benutzerdatenbank der Zieldomäne mit den in der kopierten Datei enthaltenen Identifikationsdaten.

In einer weiteren Ausführungsvariante wird beim Speichern der Identifikationsdaten in der Benutzerdatenbank basierend auf den Identifikationsdaten ein Benutzerkonto in einer computerbasierten Domänenkontrolleinheit der Zieldomäne erstellt.

Vorzugsweise werden dem Benutzercomputer mehrere Zieldomänen von einem oder mehreren externen Kommunikationsnetzwerken zugewiesen und die Identifikationsdaten werden im Benutzercomputer zugeordnet zu diesen mehreren Zieldomänen gespeichert. Überdies werden die Identifikationsdaten an mehrere, jeweils einer der Zieldomänen zugewiesene Benutzerdatenbanken übertragen und dort gespeichert. Die Übertragung und Speicherung der Identifikationsdaten erfolgt beispielsweise durch die oben erwähnte Replikationseinheit. Somit können Benutzer von der Heimdomäne aus auf Ressourcen in mehreren verschiedenen Zieldomänen zugreifen, ohne dafür spezielle Identifikationsdaten eingeben zu müssen, und ohne dass die Benutzerdaten und Zugriffsrechte vollständig über Domänegrenzen hinweg repliziert werden müssen.

Neben einem Verfahren und einem System zum Zugreifen von einem Benutzercomputer in einer Heimdomäne eines lokalen ersten Kommunikationsnetzwerks auf computergestützte Ressourcen in einer Zieldomäne eines externen zweiten Kommunikationsnetzwerks, bezieht sich die vorliegende Erfindung zudem auf ein Computerprogrammprodukt, das ein computerlesbares Medium umfasst mit darin enthaltenen Computerprogrammcodemitteln zur Steuerung eines oder mehrerer Prozessoren des Benutzercomputers derart, dass der Benutzercomputer die über die Benutzerschnittstelle erfassten Identifikationsdaten im Benutzercomputer zugeordnet zu der Zieldomäne speichert. Die vorliegende Erfindung bezieht sich zudem auf ein weiteres Computerprogrammprodukt, das ein computerlesbares Medium umfasst mit darin enthaltenen Computerprogrammcodemitteln zur Steuerung eines oder mehrerer Prozessoren der ausserhalb des ersten Kommunikationsnetzwerks angeordneten computerbasierten Replikationseinheit derart, dass die Replikationseinheit die Identifikationsdaten von der Domänenkontrolleinheit der Heimdomäne an die Benutzerdatenbank der Zieldomäne überträgt.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch einen Benutzercomputer in einer Heimdomäne eines lokalen Kommunikationsnetzwerks illustriert, der mit computergestützten Ressourcen in einer Zieldomäne eines externen Kommunikationsnetzwerks verbindbar ist.
Figur 2 zeigt ein Flussdiagramm, das ein Beispiel von Schrittfolgen beim Zugriff eines Benutzercomputers in einer Heimdomäne eines lokalen Kommunikationsnetzwerks auf computergestützte Ressourcen in einer Zieldomäne eines externen Kommunikationsnetzwerks illustriert.

### Wege zur Ausführung der Erfindung

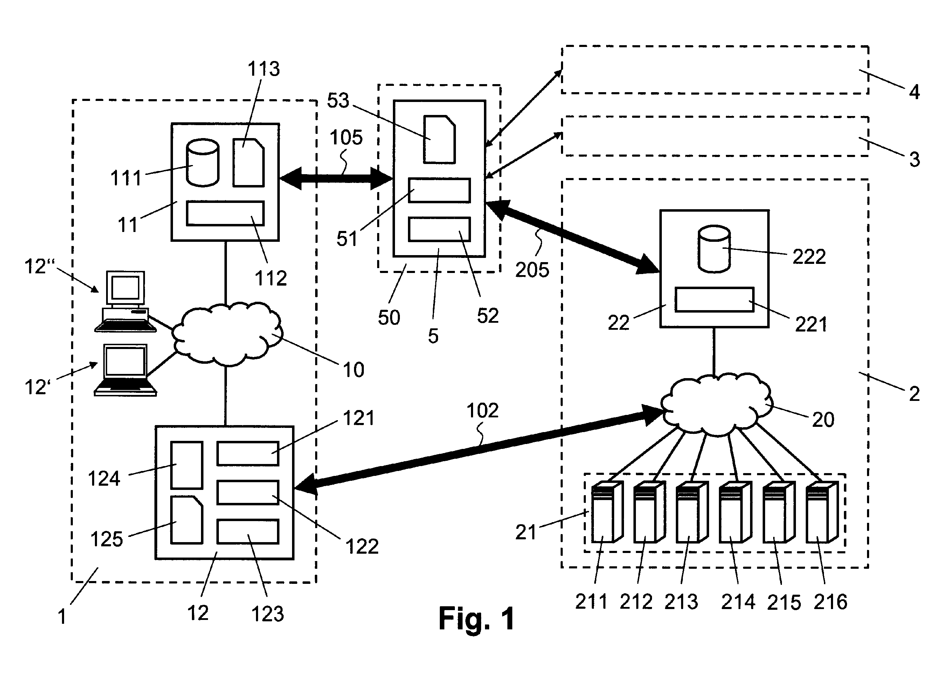

In der Figur 1 bezeichnet das Bezugszeichen 1 eine Heimdomäne mit einem lokalen Kommunikationsnetzwerk 10, das beispielsweise ein verdrahtetes und/oder ein drahtloses LAN (Local Area Network) respektive WLAN (Wireless Local Area Network) umfasst. Mehrere Benutzercomputer 12, 12', 12" sind an das Kommunikationsnetzwerk 10 angeschlossen, wobei nachfolgend nur der Benutzercomputer 12 detailliert dargestellt und beschrieben wird. Die Benutzercomputer 12, 12', 12" sind beispielsweise als feste oder mobile (Personal) Computer ausgeführt, die jeweils über ein Kommunikationsmodul für die Datenkommunikation über das Kommunikationsnetzwerk 10 verfügen. Die Heimdomäne 1 umfasst zudem eine mit dem Kommunikationsnetzwerk 10 verbundene computerbasierte Domänenkontrolleinheit 11, die als Beglaubigungsinstanz für die Benutzerverwaltung und die Zugriffskontrolle in der Heimdomäne 1 eingerichtet ist. Die Domänenkontrolleinheit 11 umfasst eine Benutzerdatenbank 111 und basiert beispielsweise auf den LDAP-Verzeichnisdiensten (Lightweight Directory Access Protocol), z.B. Active Directory von Microsoft für Windows Umgebungen.

Die Bezugszeichen 2, 3, 4 bezeichnen verschiedene, von der Heimdomäne systemisch getrennte und nicht vertrauende Zieldomänen mit jeweils einem lokalen Kommunikationsnetzwerk 20, beispielsweise ein LAN, wobei nachfolgend nur die Zieldomäne 2 detailliert dargestellt und beschrieben wird. Die Zieldomäne 2 umfasst mehrere computergestützte Ressourcen 21, beispielsweise einen Applikations-Server 211, einen Datenbank-Server 212, einen Kommunikations-Server 213, einen Web-Server 214, einen E-Mail-Server 215 und/oder einen Drucker-Server 216. Die Zieldomäne 2 umfasst zudem eine mit dem Kommunikationsnetzwerk 20 verbundene computerbasierte Domänenkontrolleinheit 22, die als Beglaubigungsinstanz für die Benutzerverwaltung und die Zugriffskontrolle in der Zieldomäne 2 eingerichtet ist. Die Domänenkontrolleinheit 22 umfasst eine Benutzerdatenbank 222 und ist beispielsweise wie die Domänenkontrolleinheit 11 ausgeführt. Für die Zugriffskontrolle von externen Zugriffen umfasst die Domänenkontrolleinheit 22 zudem ein Zugriffskontrollmodul 221, das beispielsweise auf NTLM (NT LAN Manager), insbesondere auf NTLMv2, einem Beglaubigungsverfahren (Authentifizierungsprotokoll) von Microsoft basiert, welches auch von den computergestützten Ressourcen 21 sowie dem Benutzercomputer 12 unterstützt wird.

Wie in der Figur 1 schematisch dargestellt ist, sind sowohl die Heimdomäne 1 als auch die Zieldomänen 2, 3, 4 mit einer computerbasierten Replikationseinheit 5 verbunden. In einer Ausführungsvariante ist die Replikationseinheit 5 in der Zieldomäne 2 angeordnet. Die Replikationseinheit 5 ist beispielsweise in einem MIIS-Server 50 (Microsoft Identity Integration Server) ausgeführt. Die Verbindung 105 zwischen der Domänenkontrolleinheit 11 der Heimdomäne 1 und der Replikationseinheit 5 ist beispielsweise eine gesicherte IP-Verbindung (Internet Protocol) über das Internet mit statischem NAT (Network Address Translation). Die Verbindung 205 zwischen der Domänenkontrolleinheit 22 der Zieldomäne 2 und der Replikationseinheit 5 wird direkt über das Kommunikationsnetzwerk 20 erstellt, wenn die Replikationseinheit 5 mit dem Kommunikationsnetzwerk 20 verbunden ist, ansonsten beispielsweise gesichert über das Internet. In einer weiteren Ausführungsvariante ist die Replikationseinheit 5 zusammen mit der Domänenkontrolleinheit 22 auf einem gemeinsamen Computer ausgeführt.

Die Verbindung zwischen dem Benutzercomputer 12 und den mit dem Kommunikationsnetzwerk 20 verbundenen Domänenkontrolleinheit 22 und computergestützten Ressourcen 21 erfolgt über eine gesicherte Internetverbindung, beispielsweise unter Verwendung von Tunnel-, Routing- und Proxy-Mechanismen.

Wie in der Figur 1 schematisch dargestellt ist, umfassen der Benutzercomputer 12, die Domänenkontrolleinheit 11 der Heimdomäne 1, die Replikationseinheit 5 sowie die Domänenkontrolleinheit 22 der Zieldomäne 2 verschiedene funktionale Module, insbesondere eine Benutzerschnittstelle 121, ein Erfassungsmodul 122 und ein Zugriffsmodul 123 im Benutzercomputer 12; ein Dateierstellungsmodul in der Domänenkontrolleinheit 11; ein Auslesemodul 51 und ein Aktualisierungsmodul 52 in der Replikationseinheit 5; sowie das Zugriffskontrollmodul 221 in der Domänenkontrolleinheit 22. Die funktionalen Module sind vorzugsweise als programmierte Softwaremodule auf einem Computerprogrammprodukt ausgeführt. Das Computerprogrammprodukt umfasst vorzugsweise ein computerlesbares Medium, das den Computerprogrammcode der funktionalen Module enthält. Das computerlesbare Medium ist als fester Speicher in den betreffenden Einheiten ausgeführt oder wird den Einheiten als mobiler Datenträger zugeführt, z.B. als CD (Compact Disc).

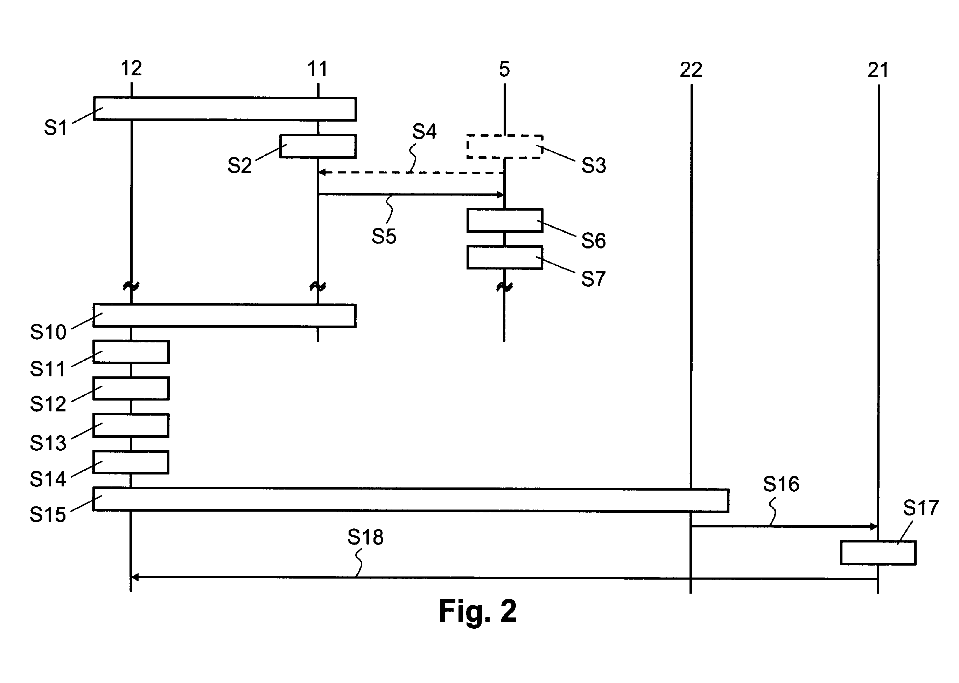

In den folgenden Abschnitten werden mit Bezug zur Figur 2 die Funktionalität der funktionalen Module sowie mögliche Schrittfolgen beim Zugriff des Benutzercomputers 12 auf die die computergestützten Ressourcen 21 in der Zieldomäne 2 eines externen Kommunikationsnetzwerks 20 beschrieben.

Im Schritt S1 verwendet der Benutzer des Benutzercomputers 12 die Benutzerschnittstelle 121, beispielsweise eine GINA-Benutzerschnittstelle (Graphical Identification and Authentication) von Microsoft zur Eingabe von geänderten Benutzerzugangsdaten, insbesondere zur Änderung von Identifikationsdaten, beispielsweise zur Änderung seines Passworts. Die geänderten Identifikationsdaten werden durch die Benutzerschnittstelle 121 über das Kommunikationsnetz 10 an die Domänenkontrolleinheit 11 übertragen, welche die Benutzerzugangsdaten in der Benutzerdatenbank 111 mit den geänderten Identifikationsdaten aktualisiert. Die eingegebenen und geänderten Identifikationsdaten werden im Benutzercomputer 12 zudem durch das Erfassungsmodul 122 im Datenbereich der so genannten Stored Credentials 124 gespeichert, was später im Zusammenhang mit den Schritten S11, S12 und S13 eingehender beschrieben wird.

Im Schritt S2 erstellt das Datenerstellungsmodul 112 als Reaktion auf die Änderung der Benutzerzugangsdaten in der Benutzerdatenbank 111 eine verschlüsselte Datei 113 mit den geänderten Identifikationsdaten und stellt diese Datei 113 für die Übermittlung an die Replikationseinheit 5 bereit.

In einer Ausführungsvariante leitet das Auslesemodul 51 im Schritt S3 eine Datenabfrage ein und übermittelt die Datenabfrage im Schritt S4 an die Domänenkontrolleinheit 11 um die Übermittlung der bereitgestellten Datei 113 anzufordern. Die Datenabfrage erfolgt über die Verbindung 105 beispielsweise basierend auf LDAP. Die Einleitung der Datenabfrage erfolgt beispielsweise periodisch im so genannten Pull Modus. In einer alternativen (bevorzugten) Ausführungsvariante wird die Übermittlung der bereitgestellten Datei 113 im so genannten Push Modus durch das Datenerstellungsmodul 112 automatisch als Reaktion auf geänderte Benutzerzugangsdaten eingeleitet.

Im Schritt S5 wird die bereitgestellte Datei 113 mit den geänderten Identifikationsdaten über die Verbindung 105 an die Replikationseinheit 5 übermittelt.

Im Schritt S6 entschlüsselt das Auslesemodul 51 die empfangenen Datei 113, ermittelt die in der empfangenen Datei 113 enthaltenen Identifikationsdaten und erweitert diese mit einer der Heimdomäne 1 zugewiesenen Firmenkennung. Die Firmenkennung wird beispielsweise aus der Firmentabelle 53 bestimmt, wo jeweils verschiedenen Heimdomänen 1, respektive den zugewiesenen Kommunikationsnetzen, unterschiedliche Firmenkennungen zugeordnet abgespeichert sind. Die Firmenkennung ist vorzugsweise ein alphanumerisches Kürzel, z.B. "KLIENT2" oder "TEK3", oder ein anderer geeigneter Code zur eindeutigen Unterscheidung von Firmen, Klienten, Gruppen oder Organisationen, die von ihren eigenen lokalen Kommunikationsnetzwerken 10 respektive von den damit assoziierten Heimdomänen 1 auf computergestützte Ressourcen 21 zugreifen möchten, die in Zieldomänen 2, 3, 4 externer Kommunikationsnetzwerke 20 zentralisiert "gehostet" werden. Die erweiterten Identifikationsdaten umfassen beispielsweise ein aktualisiertes Passwort, einen Benutzernamen und die Firmenkennung.

Im Schritt S7 übermittelt das Aktualisierungsmodul 52 die erweiterten ldentifikationsdaten über die Verbindung 205 an den Domänekontroller 22 zur Speicherung in der Benutzerdatenbank 222. Das Kopieren der erweiterten ldentifikationsdaten in die Benutzerdatenbank 222 erfolgt beispielsweise basierend auf LDAP. Wenn in der Benutzerdatenbank 222 für den durch die erweiterten Identifikationsdaten bestimmten Benutzer noch kein Benutzerkonto besteht, wird in der Benutzerdatenbank 222 basierend auf den Identifikationsdaten ein neues Benutzerkonto erstellt, wobei das Benutzerkonto der durch die Firmenkennung bestimmten Firma zugeordnet wird.

Zu einem späteren Zeitpunkt, logt sich der Benutzer im Schritt S10 mit seinem Benutzercomputer 12 über die Benutzerschnittstelle 121 in das Kommunikationsnetzwerk 10 der Heimdomäne 1 ein. Wie obenstehend im Zusammenhang mit Schritt S1 bereits beschrieben wurde, werden die über die Benutzerschnittstelle 121 eingegebenen Benutzerzugangsdaten zur Zugriffskontrolle über das Kommunikationsnetz 10 an die Domänenkontrolleinheit 11 übertragen.

Im Schritt S11 werden die eingegebenen Identifikationsdaten, z.B. ein Benutzername und ein Passwort und/oder biometrische Daten, durch das Erfassungsmodul 122 aus der Benutzerschnittstelle 121 erfasst. Das Erfassungsmodul 122 ist beispielsweise als DLL (Dynamic Link Library) ausgeführt.

Im Schritt S12 erweitert das Erfassungsmodul 122 die erfassten Identifikationsdaten des Benutzers mit der Firmenkennung, die der Heimdomäne 1 zugeordnet ist. Die Firmenkennung ist beispielsweise in der Konfigurationsdatei 125 im Benutzercomputer 12 gespeichert.

Im Schritt S13 speichert das Erfassungsmodul 122 die erfassten und erweiterten Identifikationsdaten im Benutzercomputer 12 im Datenbereich der Stored Credentials 124 zugeordnet zu den definierten Zieldomänen 2, 3, 4. Die Domänenkennungen der Zieldomänen, die für den Zugriff durch den Benutzercomputer 12 respektive den Benutzer vorgesehen sind, sind beispielsweise in der Konfigurationsdatei 125 respektive in einer benutzerspezifischen Konfigurationsdatei gespeichert.

Im Schritt S14 wählt der Benutzer, beispielsweise mittels eines Browsers oder einer anderen Navigationsapplikation, eine computergestützte per NTLMv2 zugreifbare Ressource 21 des externen Kommunikationsnetzwerks 20 in der Zieldomäne 2. Für den entfernten Zugriff auf die Ressourcen 21 in der Zieldomäne 2 verwendet das Zugriffsmodul 123 automatisch die im Datenbereich der Stored Credentials 124 gespeicherten erweiterten Identifikationsdaten, die der betreffenden Zieldomäne 2 zugeordnet sind.

Im Schritt S15 werden die erweiterten Identifikationsdaten für den externen Zugriff auf die Ressourcen 21 vom Zugriffsmodul 123, beispielsweise basierend auf NTLMv2, über die Verbindung 102 an den Domänekontroller 22 übermittelt. Bei einer Übereinstimmung der übermittelten erweiterten Identifikationsdaten mit den in der Benutzerdatenbank 22 für den Benutzer gespeicherten erweiterten Identifikationsdaten gibt das Zugriffskontrollmodul 221 der Domänenkontrolleinheit 22 den Zugriff auf die angeforderte computergestützte Ressource 21 in der Zieldomäne frei. Je nach Ausführungsvariante wird der externe Zugriff beispielsweise im Schritt S16 an die selektierte Ressource 21 weitergeleitet, im Schritt S17 durch die Ressource 21 behandelt, und im Schritt S18 eine entsprechende Ressourcenantwort über die Verbindung 102 an den Benutzercomputer 12 übermittelt. Auf Grund der Firmenzugehörigkeit des Benutzercomputers 12 wird der Ressourcenzugriff beispielsweise durch die Domänenkontrolleinheit 22 oder die selektierte Ressource 21 firmenspezifisch behandelt. Die Weiterleitung des Ressourcenzugriffs und die Übermittlung der Ressourcenantwort erfolgt basierend auf NTLMv2.

## Patentansprüche

1. Verfahren zum Zugreifen von einem Benutzercomputer (12) in einer Heimdomäne (1) eines lokalen ersten Kommunikationsnetzwerks (10) auf computergestützte Ressourcen (21) in einer Zieldomäne (2) eines externen zweiten Kommunikationsnetzwerks (20), umfassend:
Erfassen von Benutzerzugangsdaten in einer computerbasierten Domänenkontrolleinheit (11) der Heimdomäne (1) über eine Benutzerschnittstelle (121) des Benutzercomputers (12), wobei die Benutzerzugangsdaten Identifikationsdaten zur Identifizierung eines Benutzers umfassen,
Speichern der Identifikationsdaten im Benutzercomputer (12) zugeordnet zur Zieldomäne (2),
Übertragen der in der Domänenkontrolleinheit (11) erfassten Identifikationsdaten an eine im zweiten Kommunikationsnetzwerk (20) angeordnete computerbasierte Benutzerdatenbank (222) der Zieldomäne (2),
Speichern der übertragenen Identifikationsdaten in der Benutzerdatenbank (222) der Zieldomäne (2), und
Zugreifen auf eine der computergestützten Ressourcen (21) in der Zieldomäne (2) durch den Benutzercomputer (12) unter Verwendung der im Benutzercomputer (12) gespeicherten Identifikationsdaten.

2. Verfahren nach Anspruch 1, **gekennzeichnet durch** Zuweisen einer Firmenkennung zum ersten Kommunikationsnetzwerk (10), Erweitern der Identifikationsdaten **durch** die Firmenkennung beim Speichern der Identifikationsdaten im Benutzercomputer (12) und beim Speichern der übertragenen Identifikationsdaten in der Benutzerdatenbank (222) der Zieldomäne (2), und Verwendung der **durch** die Firmenkennung erweiterten, im Benutzercomputer (12) gespeicherten Identifikationsdaten beim Zugreifen auf die Ressource in der Zieldomäne (2).

3. Verfahren nach einem der Ansprüche 1 oder 2, **dadurch gekennzeichnet, dass** in der Domänenkontrolleinheit (11) der Heimdomäne (1) eine Datei (113) mit den Identifikationsdaten bereitgestellt wird bei Änderungen der Benutzerzugangsdaten über die Benutzerschnittstelle (121), dass die Datei (113) durch eine ausserhalb des ersten Kommunikationsnetzwerks (10) angeordnete computerbasierte Replikationseinheit (5) von der Domänenkontrolleinheit (11) der Heimdomäne (1) in die Replikationseinheit (5) kopiert wird, und dass die Replikationseinheit (5) die Benutzerdatenbank (222) der Zieldomäne (2) mit den in der kopierten Datei enthaltenen Identifikationsdaten aktualisiert.

4. Verfahren nach einem der Ansprüche 1 bis 3, **dadurch gekennzeichnet, dass** beim Speichern der Identifikationsdaten in der Benutzerdatenbank (222) basierend auf den Identifikationsdaten ein Benutzerkonto in einer computerbasierten Domänenkontrolleinheit (22) der Zieldomäne (2) erstellt wird.

5. Verfahren nach einem der Ansprüche 1 bis 4, **dadurch gekennzeichnet, dass** dem Benutzercomputer (12) mehrere Zieldomänen (2, 3, 4) von einem oder mehreren externen Kommunikationsnetzwerken zugewiesen werden, dass die Identifikationsdaten im Benutzercomputer (12) zugeordnet zu den mehreren Zieldomänen (2, 3, 4) gespeichert werden, und dass die Identifikationsdaten an mehrere, jeweils einer der Zieldomänen (2, 3, 4) zugewiesene Benutzerdatenbanken (22) übertragen und dort gespeichert werden.

6. Verfahren nach einem der Ansprüche 1 bis 5, **dadurch gekennzeichnet, dass** als computergestützte Ressourcen (21) mindestens einer aus Applikations-Server (211), Datenbank-Server (212), Kommunikations-Server (213), Web-Server (214), E-Mail-Server (215) und Drucker-Server (216) bereitgestellt werden, wobei der Applikations-Server (211), der Datenbank-Server (212), der Kommunikations-Server (213), der Web-Server (214), der E-Mail-Server (215) und der Drucker-Server (216) durch Benutzercomputer (12) in mehreren verschiedenen Heimdomänen (1) von jeweils einem von mehreren Kommunikationsnetzwerken (10) unter Verwendung der jeweils im betreffenden Benutzercomputer (12) gespeicherten Identifikationsdaten zugreifbar sind.

7. Verfahren nach einem der Ansprüche 1 bis 6, **dadurch gekennzeichnet, dass** eine auf MSGINA (Microsoft Graphical Identification and Authentication) basierende Benutzerschnittstelle (121) verwendet wird, dass die Identifikationsdaten im Benutzercomputer (12) in einem SD-Bereich (Stored Credentials) (124) gespeichert werden, dass die Domänenkontrolleinheit (11, 22) mit einem AD-Verzeichnisdienst (Active Directory) verwendet wird, dass die Replikationseinheit (5) in einem MIIS-Server (Microsoft Identity Integration Server) (50) ausgeführt wird, dass die Replikationseinheit (5) die Identifikationsdaten in der Benutzerdatenbank (222) einer computerbasierten Domänenkontrolleinheit (22) der Zieldomäne (2) speichert, und dass über ein NTLM-Authentifizierungsprotokoll (NT LAN Manager) auf die computergestützten Ressourcen (21) zugegriffen wird.

8. System zum Zugreifen von einem Benutzercomputer (12) in einer Heimdomäne (1) eines lokalen ersten Kommunikationsnetzwerks (10) auf computergestützte Ressourcen (21) in einer Zieldomäne (2) eines externen zweiten Kommunikationsnetzwerks (20), wobei im Benutzercomputer (12) eine Benutzerschnittstelle (121) angeordnet ist zum Erfassen und Übertragen von Benutzerzugangsdaten an eine computerbasierte Domänenkontrolleinheit (11) der Heimdomäne (1), und wobei die Benutzerzugangsdaten Identifikationsdaten zur Identifizierung eines Benutzers umfassen, **gekennzeichnet durch**,
ein im Benutzercomputer (12) angeordnetes Erfassungsmodul (122) zum Speichern der über die Benutzerschnittstelle (121) erfassten Identifikationsdaten im Benutzercomputer (12) zugeordnet zur Zieldomäne (2), und
Mittel zum Übertragen der in der Domänenkontrolleinheit (11) erfassten Identifikationsdaten an eine im zweiten Kommunikationsnetzwerk (20) angeordnete computerbasierte Benutzerdatenbank (222) der Zieldomäne (2), und zum Speichern der übertragenen Identifikationsdaten in der Benutzerdatenbank (222) der Zieldomäne (2), so dass die computergestützten Ressourcen (21) in der Zieldomäne (2) für den Benutzercomputer (12) unter Verwendung der im Benutzercomputer (12) gespeicherten Identifikationsdaten zugreifbar sind.

9. System nach Anspruch 8, **dadurch gekennzeichnet, dass** das System Mittel umfasst zum Zuweisen einer Firmenkennung zum ersten Kommunikationsnetzwerk (10), dass das Erfassungsmodul (122) eingerichtet ist, die Identifikationsdaten mit der Firmenkennung zu erweitern beim Speichern der Identifikationsdaten im Benutzercomputer (12), dass die Mittel zum Übertragen der Identifikationsdaten eingerichtet sind, die Identifikationsdaten mit der Firmenkennung zu erweitern beim Speichern der übertragenen Identifikationsdaten in der Benutzerdatenbank (222) der Zieldomäne (2), und dass der Benutzercomputer (12) eingerichtet ist, beim Zugreifen auf die Ressource (21) in der Zieldomäne (2) die mit der Firmenkennung erweiterten, im Benutzercomputer (12) gespeicherten Identifikationsdaten zu verwenden.

10. System nach einem der Ansprüche 8 oder 9, **dadurch gekennzeichnet, dass** die Domänenkontrolleinheit (11) der Heimdomäne (1) ein Dateierstellungsmodul (112) umfasst zum Bereitstellen einer Datei mit den Identifikationsdaten in der Domänenkontrolleinheit (11) der Heimdomäne (1) bei Änderungen der Benutzerzugangsdaten über die Benutzerschnittstelle (121), dass das System eine ausserhalb des ersten Kommunikationsnetzwerks (10) angeordnete computerbasierte Replikationseinheit (5) umfasst zum Kopieren der Datei von der Domänenkontrolleinheit (11) der Heimdomäne (1) in die Replikationseinheit (5) und zum Aktualisieren der Benutzerdatenbank (222) der Zieldomäne (2) mit den in der kopierten Datei enthaltenen Identifikationsdaten.

11. System nach einem der Ansprüche 8 bis 10, **dadurch gekennzeichnet, dass** die Mittel zum Speichern der Identifikationsdaten in der Benutzerdatenbank (222) eingerichtet sind, basierend auf den Identifikationsdaten ein Benutzerkonto in einer computerbasierten Domänenkontrolleinheit (22) der Zieldomäne (2) zu erstellen.

12. System nach einem der Ansprüche 8 bis 11, **dadurch gekennzeichnet, dass** das Erfassungsmodul (122) eingerichtet ist, die Identifikationsdaten im Benutzercomputer (12) zugeordnet zu mehreren Zieldomänen (2, 3, 4) von einem oder mehreren externen Kommunikationsnetzwerken (20) zu speichern, und dass die Mittel zum Speichern der Identifikationsdaten in der Benutzerdatenbank (222) eingerichtet sind, die Identifikationsdaten in mehrere, jeweils einer der Zieldomänen (2, 3, 4) zugewiesene Benutzerdatenbanken (222) zu speichern.

13. System nach einem der Ansprüche 8 bis 12, **dadurch gekennzeichnet, dass** die computergestützten Ressourcen (21) mindestens einen aus Applikations-Server (211), Datenbank-Server (212), Kommunikations-Server (213), Web-Server (214), E-Mail-Server (215) und Drucker-Server (216) umfassen, wobei der Applikations-Server (211), der Datenbank-Server (212), der Kommunikations-Server (213), der Web-Server (214), der E-Mail-Server (215) und der Drucker-Server (216) durch Benutzercomputer (12) in mehreren verschiedenen Heimdomänen (1) von jeweils einem von mehreren Kommunikationsnetzwerken (10) unter Verwendung der jeweils im betreffenden Benutzercomputer (12) gespeicherten Identifikationsdaten zugreifbar sind.

14. System nach einem der Ansprüche 8 bis 13, **dadurch gekennzeichnet, dass** die Benutzerschnittstelle (121) auf MSGINA (Microsoft Graphical Identification and Authentication) basiert, dass das Erfassungsmodul (122) eingerichtet ist, die Identifikationsdaten im Benutzercomputer (12) in einem SD-Bereich (Stored Credentials) (124) zu speichern, dass die Domänenkontrolleinheit (11, 22) auf einem AD-Verzeichnisdienst (Active Directory) basiert, dass die Replikationseinheit (5) in einem MIIS-Server (Microsoft Identity Integration Server) (50) angeordnet ist, dass die Mittel zum Speichern der Identifikationsdaten in der Benutzerdatenbank (222) eingerichtet sind, die Identifikationsdaten in der Benutzerdatenbank (222) einer computerbasierten Domänenkontrolleinheit (22) der Zieldomäne (2) zu speichern, und dass die computergestützten Ressourcen (21) in der Zieldomäne (2) für den Benutzercomputer (12) über ein NTLM-Authentifizierungsprotokoll (NT LAN Manager) zugreifbar sind.

15. Computerprogrammprodukt umfassend: Computerprogrammcodemittel zur Steuerung eines oder mehrerer Prozessoren eines Benutzercomputers (12) in einer Heimdomäne (1) eines lokalen ersten Kommunikationsnetzwerks (10), wobei der Benutzercomputer (12) eine Benutzerschnittstelle (121) umfasst zum Erfassen und Übertragen von Benutzerzugangsdaten an eine computerbasierte Domänenkontrolleinheit (11) der Heimdomäne (1), und wobei die Benutzerzugangsdaten Identifikationsdaten zur Identifizierung eines Benutzers umfassen, **dadurch gekennzeichnet, dass** die Computerprogrammcodemittel eingerichtet sind, die Prozessoren des Benutzercomputers (12) derart zu steuern,
dass der Benutzercomputer (12) die über die Benutzerschnittstelle (121) erfassten Identifikationsdaten im Benutzercomputer (12) zugeordnet zu mindestens einer Zieldomäne (2) eines externen zweiten Kommunikationsnetzwerks (20) speichert, und
dass der Benutzercomputer (12) beim Zugreifen auf computergestützte Ressourcen (21) in der Zieldomäne (2) die im Benutzercomputer (12) gespeicherten Identifikationsdaten verwendet.

16. Computerprogrammprodukt nach Anspruch 15, **gekennzeichnet durch** weitere Computerprogrammcodemittel zur Steuerung der Prozessoren des Benutzercomputers (12) derart, dass der Benutzercomputer (12) die Identifikationsdaten beim Speichern im Benutzercomputer (12) mit einer dem ersten Kommunikationsnetzwerk (10) zugewiesenen Firmenkennung erweitert, und dass der Benutzercomputer (12) beim Zugreifen auf die Ressourcen (21) in der Zieldomäne (2) die **durch** die Firmenkennung erweiterten, im Benutzercomputer (12) gespeicherten Identifikationsdaten verwendet.

17. Computerprogrammprodukt umfassend: Computerprogrammcodemittel zur Steuerung eines oder mehrerer Prozessoren einer ausserhalb eines ersten Kommunikationsnetzwerks (10) angeordneten computerbasierten Replikationseinheit (5), derart,
dass die Replikationseinheit (5) in einer computerbasierten Domänenkontrolleinheit (11) einer Heimdomäne (1) des ersten Kommunikationsnetzwerks gespeicherte Identifikationsdaten zur Identifizierung eines Benutzers ausliest, und
dass die Replikationseinheit (5) die ausgelesenen Identifikationsdaten in einer in einem zweiten Kommunikationsnetzwerk (20) angeordneten computerbasierten Benutzerdatenbank (222) einer Zieldomäne (2) speichert, so dass computergestützte Ressourcen (21) in der Zieldomäne (2) für einen Benutzercomputer (12) in der Heimdomäne (1) des ersten Kommunikationsnetzwerks (10) unter Verwendung von im Benutzercomputer (12) gespeicherten Identifikationsdaten zugreifbar sind.

18. Computerprogrammprodukt nach Anspruch 17, **gekennzeichnet durch** weitere Computerprogrammcodemittel zur Steuerung der Prozessoren der Replikationseinheit (5) derart, dass die Replikationseinheit (5) die Identifikationsdaten beim Speichern in der Benutzerdatenbank (222) der Zieldomäne (2) mit einer dem ersten Kommunikationsnetzwerk (10) zugewiesenen Firmenkennung erweitert, so dass die computergestützten Ressourcen (21) in der Zieldomäne (2) für den Benutzercomputer (12) in der Heimdomäne (1) unter Verwendung von im Benutzercomputer (12) gespeicherten, mit der Firmenkennung erweiterten Identifikationsdaten zugreifbar sind.

19. Computerprogrammprodukt nach einem der Ansprüche 17 oder 18, **gekennzeichnet durch** weitere Computerprogrammcodemittel zur Steuerung der Prozessoren der Replikationseinheit (5) derart, dass die Replikationseinheit (5) die ausgelesenen Identifikationsdaten in mehreren, jeweils einer anderen Zieldomäne (2) zugewiesenen Benutzerdatenbanken (222) speichert, so dass computergestützte Ressourcen (21) in mehreren Zieldomänen (2, 3, 4) für den Benutzercomputer (12) in der Heimdomäne (1) unter Verwendung der im Benutzercomputer (12) gespeicherten Identifikationsdaten zugreifbar sind.
